# EUROPEAN PATENT APPLICATION

(11) **EP 2 233 102 A2**
(43) Date of publication of application: **29.09.2010**
(21) Application number: 10157048.9
(22) Date of filing: 19.03.2010
(51) Int. Cl.: A61C 1/08, A61C 1/18

(54) **Coupling with built-in light source**

(30) Priority: 23.03.2009 JP 2009069600; 14.07.2009 JP 2009165207
(71) Applicant: Nakanishi Inc., Kanuma-shi, Tochigi 322-8666 (JP)
(72) Inventor: Kawakubo, Kiyoshi, Tochigi Tochigi 322-8666 (JP); Suzuki, Wataru, Tochigi 322-8666 (JP); Sadohara, Toshiyuki, Tochigi 322-8666 (JP)
(74) Representative: Hauck Patent- und Rechtsanwälte

(57) **Abstract**

A coupling with a built-in light source for use with a handpiece body is disclosed. The coupling has a body-side connecting part to be connected to a handpiece body, a hose-side connecting part to be connected to a hose for delivering fluids, the hose-side connecting part connecting to the proximal end of the body-side connecting part, fluid channels extending through the body-side and hose-side connecting parts for communicating fluid lines in the handpiece body with the hose, and a light source disposed in the body-side or hose-side connecting part. The light source is an LED lighting device including light-emitting means having an LED chip, and a circuit board electrically connected to the light-emitting means for controlling the voltage supplied to the LED chip. The circuit board is placed in the body-side or hose-side connecting part.

## Description

The present invention relates to a coupling with a built-in light source for use with a dental handpiece.

A dental handpiece has a dental tool, such as a cutting bur or a scaler, attached at its distal end, and air or electricity for actuating the tool are supplied to the tool drive through the handpiece body. A conventional handpiece of this type is disclosed in JP-8-154949-A. This handpiece is an air-turbine handpiece, and the handpiece body includes a head section containing a pneumatic turbine unit for driving the tool, a neck section continuous to the head section, and a grip section continuous to the neck section. Fluid lines for delivering supply air, supply water, and discharge air extend through the handpiece body, and a light guide extends from the proximal end of the handpiece body to a predetermined position facing to the dental tool attached in the head section. The light-receiving end of the light guide is arranged in the center of the proximal end of the handpiece body. To this proximal end of the handpiece body, a hose for delivering fluids, such as air and water, is connected via a coupling, and a light source is arranged facing to the light-receiving end of the light guide. This coupling has a body-side connecting part to be connected to the handpiece body, and a hose-side connecting part to be connected to the hose for delivering fluids, and contains channels to be communicated with the fluid lines extending through the handpiece body and with the hose for delivering fluids, to thereby connecting the handpiece body and the hose in fluid communication. The coupling also contains a light source to be arranged facing to the light-receiving end of the light guide extending through the handpiece body, to thereby introduce light from the light source into the light guide.

As a light source of a lighting device used in a dental handpiece, LEDs have recently been attracting attention and widely used for its lower power consumption and longer service life compared to conventional halogen lamps. For light emission of LEDs, a predetermined voltage is required, which necessitates a circuit board for controlling the voltage to the LED. Thus a coupling with a built-in light source of this type needs to spare the space for such a circuit board. However, if the basic structure of the coupling, such as the position of the light source and the connection of the fluid channels, is modified for installation of the circuit board therein, the coupling cannot be connected to the existing handpieces. Thus it is desired that the basic structure of the coupling is not modified so that the coupling may be used with existing handpieces, including those currently in use by users. For installation of the circuit board, it is also desired to provide means for protecting the circuit board against impact and heat, and to facilitate the installation to the coupling to suppress the production cost.

It is therefore an object of the present invention to provide a coupling with a built-in light source, of which internal space is made best use of for installing an LED lighting device, in particular a circuit board thereof, without modifying the connection with the handpiece body and with the hose, in which the installed circuit board is securely protected against impact and heat, and in which installation of the circuit board is facilitated for suppressing the production cost.

According to the present invention, there is provided a coupling with a built-in light source for use with and by connecting to a handpiece body having fluid lines and a light guide, and to a hose for delivering fluids, comprising:
a body-side connecting part to be connected to a handpiece body,
a hose-side connecting part to be connected to a hose for delivering fluids, said hose-side connecting part connecting to a proximal end of said body-side connecting part,
fluid channels extending through said body-side and hose-side connecting parts for communicating fluid lines in the handpiece body with the hose, and
a light source disposed in said body-side or hose-side connecting part to be arranged facing to a light-receiving face of a light guide in the handpiece body when the coupling is connected to the handpiece body,
**characterized in that** said light source is an LED lighting device comprising light-emitting means having an LED chip, and a circuit board electrically connected to the light-emitting means for controlling the voltage supplied to the LED chip, and
that said circuit board is placed in said body-side or hose-side connecting part.

In a preferred embodiment of the present invention, the circuit board may be contained in a casing, which is placed in one of the fluid channels. The one of the fluid channels may further be provided with a seat for the casing, which may have a shape conforming to the contour of the casing. The casing may also have two circumferential faces of different shapes, and the seat may have two sides of different shapes corresponding to the circumferential faces of the casing. The casing and the seat may have in respective contacting surfaces connecting means for electrically connecting the circuit board in the casing to a power source.

The light-emitting means may be directly connected via its connecting terminals to the circuit board, and the light-emitting means and the circuit board are integrally placed in the body-side or hose-side connecting part.

Alternatively, the light-emitting means may be disposed in one of the body-side and hose-side connecting parts, and the circuit board is disposed in the other of the body-side and hose-side connecting parts, and the light-emitting means and the circuit board may be connected via a cable. In this case, the light-emitting means may be disposed in the distal end of the body-side connecting part, and the circuit board contained in the casing may be disposed in one of the fluid channels in the hose-side connecting part.

In another preferred embodiment of the present invention, the body-side or hose-side connecting part may have a recess dented from the circumferential face of the part without interfering with the fluid channels extending through the part, and the circuit board is placed in the recess. The circuit board placed in the recess maybe sealed with a synthetic resin.

The light-emitting means may be directly connected via its connecting terminals to the circuit board, and the light-emitting means and the circuit board are integrally placed in the body-side or hose-side connecting part.

Alternatively, the light-emitting means may be disposed in one of the body-side and hose-side connecting parts, and the circuit board is disposed in the other of the body-side and hose-side connecting parts, and the light-emitting means and the circuit board may be connected via a cable. In this case, the light-emitting means may be disposed in the distal end of the body-side connecting part, and the circuit board may be placed in the recess in the hose-side connecting part, wherein the hose-side connecting part has means for wiring a cable electrically connected to the circuit board provided either or both between the recess and the end face of the hose-side connecting part facing to the body-side connecting part and between the recess and the end face of the hose-side connecting part opposite to the body-side connecting part.
Fig. 1 is a perspective view, partially in section, of an embodiment of a coupling with a built-in light source according to the present invention.
Fig. 2 is a perspective view of the hose-side connecting part of the coupling of Fig. 1.
Fig. 3 is a longitudinal sectional view of a light-emitting part of an LED lighting device for use in the coupling of Fig. 1.
Fig. 4 is a perspective view of a circuit board of the LED lighting device for use in the coupling of Fig. 1.
Fig. 5 is an exploded perspective view of the coupling of Fig. 1, illustrating the installation of the LED lighting device.
Fig. 6 is a perspective view, seen from the hose side, of another embodiment of the hose-side connecting part of the coupling with a built-in light source according to the present invention.
Fig. 7 is a perspective view of the hose-side connecting part of Fig. 6, seen from the body-side.
Figs. 8(1) to 8(4) are explanatory perspective views of the hose-side connecting part of Fig. 6, illustrating the installation of the circuit board of the LED lighting device.

The present invention will now be explained with reference to preferred embodiments of the invention taken in conjunction with the attached drawings.

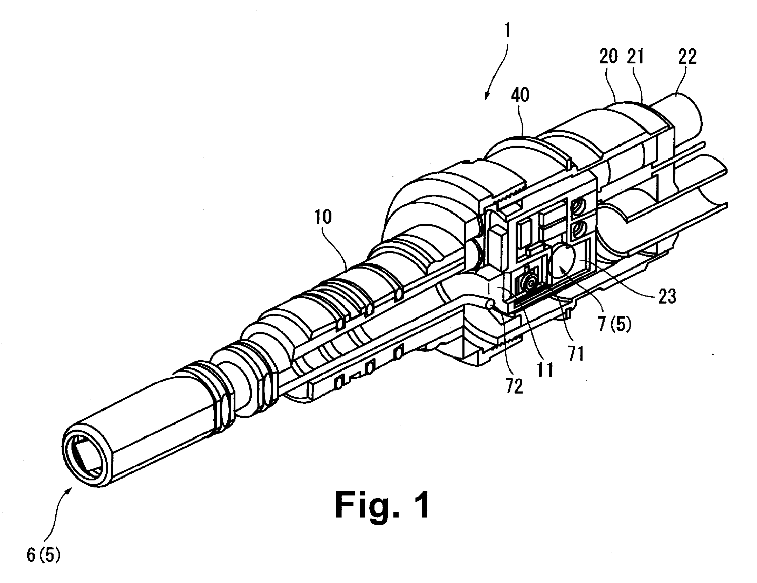

Figs. 1 to 5 show a first embodiment of a coupling with a built-in light source according to the present invention (referred simply to a coupling hereinbelow). This embodiment is a coupling to be used with an air turbine handpiece.

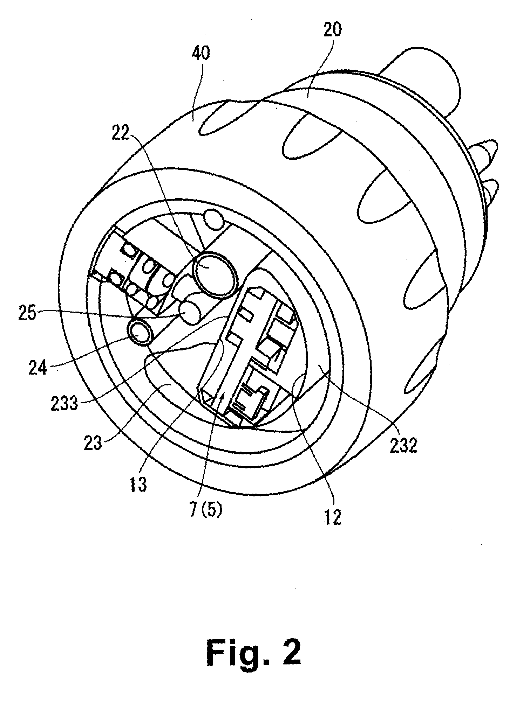

Referring to Figs. 1 and 2, the coupling 1 has body-side connecting part 10 to be connected to a handpiece body, and hose-side connecting part 20 to be connected to a hose for delivering fluids, which is in turn connected to a dental unit. The body-side connecting part 10 has various channels to be connected in fluid communication with the fluid lines in the handpiece body, including air supply channel 22, air discharge channel 23, chip air channel 24, and water supply channel 25. The hose-side connecting part 20 has various channels to be connected in fluid communication with the hose, including air supply channel 22, air discharge channel 23, chip air channel 24, and water supply channel 25. The hose-side connecting part 20 is connected to the proximal end of the body-side connecting part 10 via joining means, which is a conventional threaded connection ring 40, so that the various fluid channels, including the air supply channel 22, air discharge channel 23, chip air channel 25, and water supply channel 25, in the respective parts 10 and 20 are connected in fluid communication.

Using a known coupler structure, the coupling 1 is connected to the handpiece body simply by inserting the body-side connecting part 10 into the rear end of the handpiece body. Using a known fastening thread structure, the coupling 1 is connected to the hose by inserting the hose over proximal end of the hose-side connecting part 20 and fastening a hose nut (not shown), which has been passed around the hose, onto thread 21 on the hose-side connecting part 20.

A light source is disposed in the distal end of the body-side connecting part 10, and is to be arranged facing to the light-receiving end of a light guide in the handpiece body when the coupling 1 is connected to the handpiece body.

The coupling 1 is connected to the handpiece body at the body-side connecting part 10 and to the hose at the hose-side connecting part 20 so that the fluid lines in the handpiece body are connected to the hose in fluid communication, and the light source is arranged facing to the light-receiving end of the light guide extending through the handpiece body.

Referring to Fig. 1, the light source provided in the coupling 1 is LED lighting device 5. This LED lighting device 5 has light-emitting part 6 having an LED chip (LED element), and circuit board 7 electrically connected to the light-emitting part 6 for energizing the LED chip at a predetermined voltage.

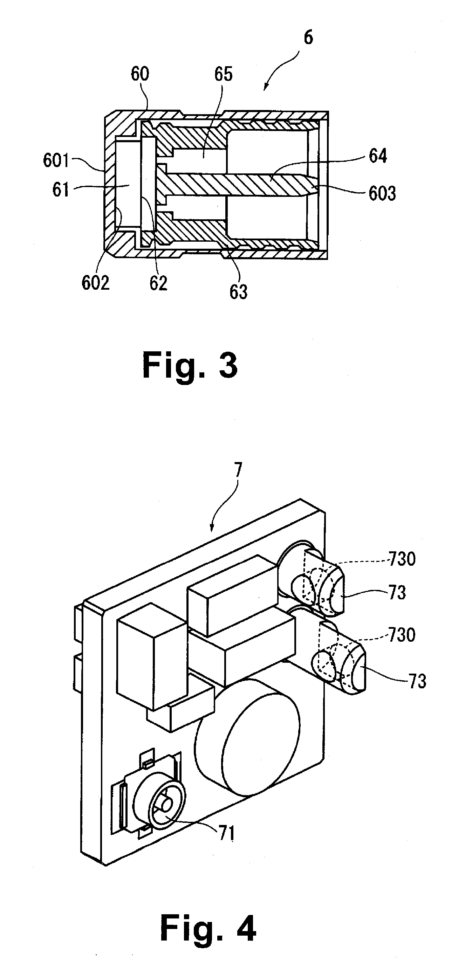

The light-emitting part 6 has, as shown in Fig. 3, the LED element 61, substrate 62, and terminals 63 and 64 encased in cylindrical case 60 in this order.

The case 60 is made of a transparent synthetic resin, and has one end closed with a plane wall, which functions as a cover for the LED element 61 and light-emitting face 601, and the other end forming opening 603. Inside the case 60 , annular step is formed along the inner circumference near the closed end face, and rectangular dent 602 is formed in the inner surface of the closed end face.

The LED element 61 is formed as a rectangular chip with a size smaller than the inner diameter of the case 60, and fits in the rectangular dent 602 in the closed end face of the case 60. The substrate 62 is in the form of a generally circular disk having a diameter smaller than the inner diameter of the case 60 so as to be arranged in the case 60, and is slightly larger than the LED element 61. Two arcuate notches are formed on the periphery of the substrate 62 at diametrally opposite positions.

One of the terminals 63, 64 is cathode terminal (negative electrode) 63 generally in the form of a cylinder having a larger diameter section, which has an outer diameter approximately the same as or slightly smaller than the inner diameter of the case 60 and has a corrugated outer surface, and a smaller diameter section, which is continuous to the larger diameter section and has an outer diameter smaller than the outer diameter of the larger diameter section. On the end face of the smaller diameter section, two axial protrusions arranged at diametrally opposite positions are formed for fitting in the notches of the substrate 62, and also two recesses are formed at diametrally opposite positions and at 90° angular distance from the protrusions. The substrate 62 is attached on the end face of the smaller diameter section of the cathode terminal 63, with the two protrusions on the end face being fitted in the two notches of the substrate 62.

The other of the terminals 63, 64 is anode terminal 64 generally in the form of a pin positioned along the central axis of the cathode terminal 63, and having a flange at one end and a tapered portion at the other end. The anode terminal 64 is assembled with the cathode terminal 63 via terminal support 65.

The terminal support 65 is made of an electrically insulating material, and has an outer contour to fit inside the smaller diameter section of the cathode terminal 63, and a stepped recess in one end face, in which the flange of the anode terminal 64 is fitted.

In assembly of the light-emitting part 6, first the anode terminal 64 is inserted into the terminal support 65 along its center axis, and supported therein with the flange being fitted in the stepped recess and the tapered end extending out of the free end of the support 65. The support 65, with the anode terminal 64 supported therein, is then inserted into the cathode terminal 63 along its central axis, and fit in the smaller diameter section. The anode terminal 64, the terminal support 65, and the cathode terminal 63 are positioned concentrically, and the flange of the anode terminal 64 is connected to the substrate 62. In this way, the LED element 61, the substrate 62, the cathode terminal 63, and the anode terminal 64 are assembled in the case 60 in this order from the light-emitting face 601.

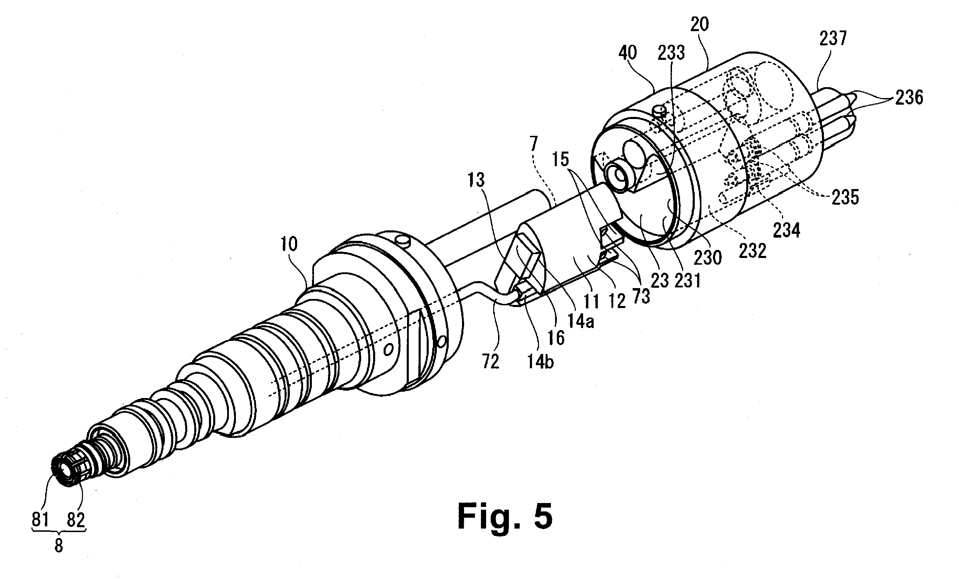

Referring to Fig. 4, the circuit board 7 is generally in a rectangular shape, and has, on one of its faces, connecting terminal 71 on one side of the face, and connectors 73, 73 on the other side of the face. The connecting terminal 71 is to be connected to the terminals 63 and 64 of the light-emitting part 6 via cable 72 (see Fig. 5). The connectors 73, 73 project from one face of the circuit board 7, and are to be connected to a power source. Each connector 73 is in a semicylindrical form, and has pin insertion hole 730 penetrating from its flat face to the curved face.

As shown in Figs. 1 and 5, the light-emitting part 6 and the circuit board 7 of the LED lighting device 5 are separately installed in the coupling 1. That is, the light-emitting part 6 is disposed in the distal end of the body-side connecting part 10, and the circuit board 7 is contained in hollow casing 11 and disposed in a fluid passage 23 in the coupling 1. The light-emitting part 6 and the circuit board 7 are connected via the cable 72.

In this embodiment, connecting terminals in the form of socket 8 is provided in the distal end of the body-side connecting part 10 for receiving the light-emitting part 6 therein. The socket 8 is composed of two concentric cylinders which are arranged via an electrically insulating material therebetween. The inner cylinder with a smaller diameter is inner terminal 81, which is formed such that the anode terminal 64 of the light-emitting part 6 is inserted and fitted therein. The outer cylinder with a larger diameter is outer terminal 82, which is formed such that the inner surface of the cathode terminal 63 of the light-emitting part 6 fits over the outer surface of the outer terminal 82. The connecting end of the outer terminal 82 is divided into a plurality of flaps, which are flexed radially inwardly by means of an external force and elastically return to the initial position by removal of the external force.

The socket 8 is disposed in the distal end of the body-side connecting part 10 and connected to one end of the cable 72, the other end of which extends through the interior of the body-side connecting part 10 toward its rear end. The light-emitting part 6 may be connected to the socket 8 simply by inserting the terminals 63 and 64 of the light-emitting part 6 into the socket 8. That is, when the terminals 63 and 64 are inserted into the socket 8, the anode terminal 64 is inserted into and brought into contact with the inner terminal 81 of the socket 8, whereas the cathode terminal 63 fits over the outer terminal 82 of the socket 8 to bring the inner surface of the larger diameter portion into press contact with the outer surface of the outer terminal 82, which elastic engagement holds the light-emitting part 6 in place in the socket 8. The difference in shape of the cathode terminal 63 and the anode terminal 64 clearly distinguishes the polarity of these electrode terminals, so that the light-emitting part 6 will not be connected to the socket 8 in wrong polarity.

Referring to Figs. 2 and 5, the casing 11 for containing and holding the circuit board 7 therein is generally in the form of a semicylinder which can contain the circuit board 7. The semicylindrical casing 11 has two circumferential faces 12 and 13 of different shapes, i.e., flat face 13 and curved face 12, which conforms to the inner surface of the coupling 1. In one end of the casing 11, opening 14a and cable insertion port 14b are formed, which opening 14a is closed with cushioning material 16 or a lid. The other end of the casing 11 is closed and formed with grooves 15, 15 at the locations corresponding to the connectors 73, 73 of the encased circuit board 7. Connector holes for exposing the connectors 73, 73 of the encased circuit board 7 are formed at the bottom of the grooves 15, 15.

The circuit board 7 is inserted into the casing 11 through the opening 14a and contained therein, with the connectors 73, 73 being exposed through the connector holes into the grooves 15, 15. The cable 72 led from the socket 8 in the distal end of the body-side connecting part 10 is connected to the connecting terminal 71 of the encased circuit board 7 through the cable insertion port 14b of the casing 11.

The casing 11 thus containing the circuit board 7 is placed in one of the fluid channels, in this embodiment, in the air discharge channel 23. Seat 230 for the casing 11 is formed inside the air discharge channel 23 in the hose-side connecting part 20. The seat 230 has a shape conforming to the contour of the casing 11, and in this embodiment, is formed generally in the shape of a semicylinder, which has curved side 232 corresponding to the curved face 12 of the casing 11, and flat side 233 corresponding to the flat face 13 of the casing 11. The seat 230 is opened in opening 231 of the air discharge channel 23 at the end of the hose-side connecting part 20 facing to the body-side connecting part 10, through which opening the casing 11 may be inserted axially.

The seat 230 and the casing 11 to be placed in the seat 230 are provided with corresponding connecting parts in their respective contacting surfaces at an arbitrary position for providing connection of the circuit board 7 in the casing 11 to the power source. In this embodiment, the connecting part on the side of the seat 230 is connecting part 234 provided in the proximal end of the seat 230. The connecting part 234 includes electrode pin supports 235, 235 formed in the proximal end face of the seat 230, and electrode pins 236, 236 inserted at one end into the electrode pin supports 235, 235 and extended into the seat 230. The other end of the electrode pins 236, 236 extend out of the proximal end of the hose-side connecting part 20 through air discharge duct 237 for connection to the power source. The corresponding connecting part on the side of the casing 11 includes the connectors 73, 73 exposed into the grooves 15, 15 in the proximal end of the casing 11.

For installing the casing 11 in the seat 230, the casing 11 containing the circuit board 7 therein with the connectors 73, 73 being exposed through the connector holes into the grooves 15, 15, is inserted through the opening 231 into the seat 230 so as to face the curved face 12 and the flat face 13 to the curved side 232 and the flat side 233, respectively. This allows connection of the connecting parts of the casing 11 and the seat 230, i.e., the electrode pins 236, 236 in the proximal end of the seat 230 are inserted into the pin insertion holes 730, 730 of the connectors 73, 73 to provide electrical connection of the connectors 73, 73 to the electrode pins 236, 236.

In the coupling 1 of this embodiment, as discussed above, the light-emitting part 6 of the LED lighting device 5 is arranged in the distal end of the body-side connecting part 10, whereas the circuit board 7 of the LED lighting device 5 is contained in the casing 11 and disposed inside the air discharge channel 23. Thus installation of the circuit board 7 in the coupling 1 does not require modification of the basic structure of the coupling 1, including the position of the light-emitting part 6, the connection of the fluid channels 22, 23, 24, and 25, and the interior of the coupling 1 is made best use of. Thus the coupling 1 may be connected to the handpiece body and to the hose with a conventional mechanism, and the coupling 1 may be used with various existing dental handpieces having a conventional lighting device in the same way as the conventional coupling for providing connection to the hose.

Further, the circuit board 7 is contained in the casing 11, which is inserted into and installed in the seat 230 in the fluid channel 23. In this arrangement, the circuit board 7 is provided with double protection with the casing 11 and the fluid channel 23 against impact upon or heat inside the handpiece body or the coupling. In addition, the circuit board 7 is directly cooled with the fluid (air) passing through this channel 23, which allows prolongation of the service life of the parts.

The circuit board 7 may be installed in the coupling 1 simply by containing the circuit board 7 in the casing 11 and inserting the casing 11 into the seat 230 in the fluid channel 23. Thus installation of the circuit board 7 is facilitated and the associated production cost is suppressed.

In the coupling 1, the seat 230 having a form conforming to the contour of the casing 11 and receiving the casing 11 in the axial direction, is provided in the fluid channel 23. This facilitates insertion and secure installation of the casing 11 containing the circuit board 7 in the fluid channel 23.

The casing 11 is configured to have two circumferential faces 12 and 13 of difference shapes, and the seat 230 is configured to have two faces 232 and 233 of corresponding shapes. Thus the insertion and positioning of the casing 11 in the seat 230 is guided to facilitate the installation of the casing 11 in the correct orientation in the correct position. Also, rattling of the casing 11 in the coupling 1 is securely prevented. By stably installing the circuit board 7 in the correct position, color shading of the light emitted from the LED is prevented, and the quality of the LED lighting device 5 may be improved.

In this coupling 1, the seat 230 and the casing 11 are provided with corresponding connecting parts in their respective contacting surfaces for providing connection of the circuit board 7 in the casing 11 to the power source. This allows electrical connection of the circuit board 7 to the power source simply by inserting the casing 11 into the seat 230 in the fluid channel 23. Further, the light-emitting part 6 and the circuit board 7 of the LED lighting device 5 are formed with the connectors of a plug type to be inserted into a socket, and easily replaceable. Thus replacement of the LED element with that of different properties, such as the light color, and replacement of the circuit board 7 may be flexibly coped with.

In this embodiment, the casing 11 containing the circuit board 7 is described to be installed in the air discharge channel 23, but the casing 11 may alternatively be installed in other fluid channels, such as air supply channel 22, chip air channel 24, or water supply channel 25. For installation in a water channel, the casing 11 should be made water-proof.

In this embodiment, the casing 11 is described to be installed in the fluid channel 23 in the hose-side connecting part 20 of the coupling 1, but the casing 11 may alternatively be installed in the body-side connecting part 10 or between the hose-side and body-side connecting parts 10 and 20, which may be decided suitably depending on the overall structure of the coupling 1.

In this embodiment, the light-emitting part 6 and the circuit board 7 of the LED lighting device 5 are described to be separately installed, but the light-emitting part 6 may be directly connected via its connecting terminals to the circuit board 7 and installed integrally therewith. In this case, the LED lighting device 5 may still be installed in the similar way as discussed above, and the similar effect may be achieved.

This embodiment of the coupling 1 has been described to be used with an air-turbine handpiece, but the type of the handpiece is not limited, and the present invention may be used widely with various dental handpieces having fluid lines.

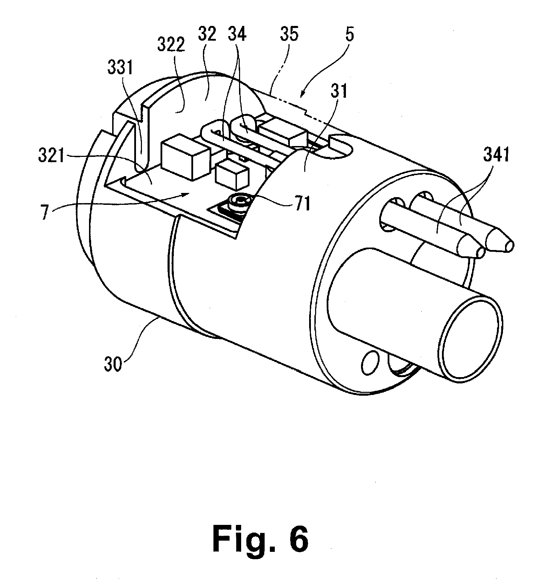

Figs. 6 to 8 show another embodiment of the hose-side connecting part of the coupling 1 according to the present invention. The hose-side connecting part 30 shown in these figures replaces the hose-side connecting part 20 of the coupling 1 of the first embodiment, and other parts of the coupling 1 are the same as in the first embodiment. The hose-side connecting part 30 is different from the part 20 in the installation of the circuit board 7 of the LED lighting device 5, so that the following description is focused on how the circuit board 7 is installed in this embodiment.

In this embodiment, the light-emitting part 6 and the circuit board 7 of the LED lighting device 5 are separately installed in the coupling 1. That is, the light-emitting part 6 is disposed in the distal end of the body-side connecting part 10 (Fig. 1) in the same way as in the first embodiment, and the circuit board 7 is installed in the hose-side connecting part 30.

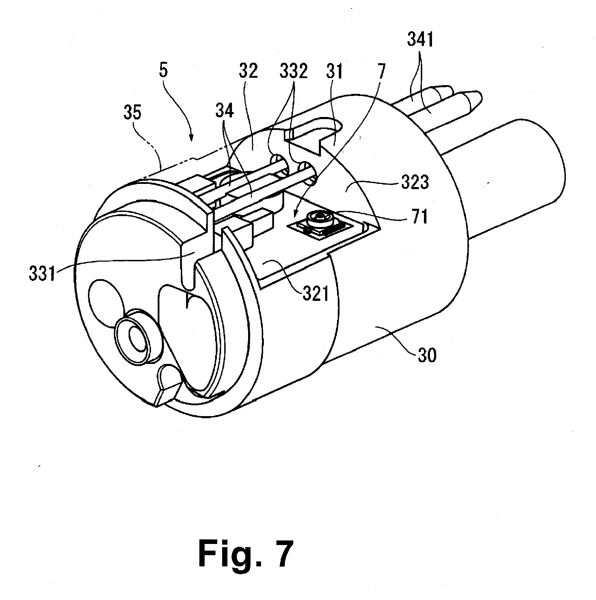

Referring to Figs. 6 and 7, the hose-side connecting part 30 is generally in a cylindrical form like the hose-side connecting part 20 in the first embodiment, and has recess 32 dented from the circumferential face 31 of the part 30. The recess 32 takes up, from outside, the dead space inside the hose-side connecting part 30 wherein the various fluid channels and the like, including the air supply, air discharge, chip air, and water channels, are not located, so as not to interfere with these internal parts. In this embodiment, the recess 32 is formed contiguous to the distal end face of the hose-side connecting part 30 facing to the body-side connecting part 10. The recess 32 has a cross-section in the form of a circular segment, and is defined by bottom face 321 generally in parallel with the longitudinal axis of the part 30, and two opposed end faces 322 and 323 at both ends of the bottom face 321. The distal end face 322 is contiguous to and generally in parallel with the distal end face of the hose-side connecting part 30, and the proximal end face 323 is axially apart from and generally in parallel with the distal end face 322.

Groove 331 for use in wiring the cable 72 to be connected to the circuit board 7 is formed as an axial cut-out in the circumferential surface 31 between the distal end face of the hose-side connecting part 30 and the distal end face 322 of the recess 32. Between the opposite, proximal end face of the hose-side connecting part 30 and the proximal end face 323 of the recess 32, through holes 332, 332 extending through the interior of the part 30 are formed for use in wiring cables 34, 34 to be connected to the circuit board 7.

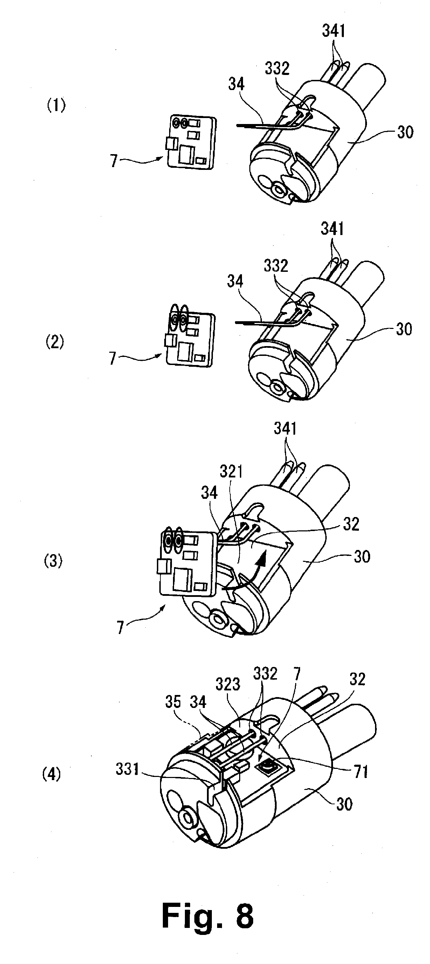

Wiring of the circuit board 7 with the cables 34, 34 are illustrated in Figs. 8(1) to 8(4). As shown in Fig. 8(1), the cables 34, 34 are inserted through the through holes 332, 332, and connected to the electrode pins 341, 341 at one end, which pins 341, 341 extend out of the proximal end face of the hose-side connecting part 30 for connection to the power source. As shown in Fig. 8(2), the free end of the cables 34, 34 are inserted into the through holes formed in the circuit board 7 from the front face and soldered therein. The circuit board 7 is oriented face out (face-up in the figures) and laid under the cables 34 as shown in Fig. 8(3), and finally positioned on the bottom face 321 of the recess 32. In this way, as shown in Fig. 8(4), the circuit board 7 is positioned in the recess 32 of the hose-side connecting part 30, with the cables 34, 34 extending in the axial direction of the hose-side connecting part 30 and being connected to and running over the circuit board 7.

The cable 72 led from the socket 8 in the distal end of the body-side connecting part 10 is wired through the groove 331 and connected to the connecting terminal 71 of the circuit board. In this way, the light-emitting part 6 placed in the socket 8 is electrically connected via the cable 72, circuit board 7, cables 34, and electrode pins 341, to the power source.

In this state, the circuit board 7 is sealed with synthetic resin 35 in the recess 32 of the hose-side connecting part 30.

In this way, the light-emitting part 6 of the LED lighting device 5 is disposed in the distal end of the body-side connecting part 10, and the circuit board 7 is placed in the recess 32 in the hose-side connecting part 30 and sealed with the synthetic resin 35, which recess 32 is dented from the circumferential face 31 to take up, from outside, the space inside the hose-side connecting part 30 which does not interfere with the various fluid channels. Thus installation of the circuit board 7 does not require modification of the basic structure of the coupling 1, including the position of the light-emitting part 6 and the connection of the fluid channels, so that the coupling 1 may be used with the existing air-turbine handpieces in the similar way as a conventional coupling. That is, by connecting the hose for delivering various fluids to the hose-side connecting part 30 of the coupling 1, and inserting the body-side connecting part 10 of the coupling 1 into the handpiece body, the various fluid lines in the handpiece body are connected to the hose for delivering various fluids, and the light-emitting part 6 disposed in the distal end of the body-side connecting part 10 is arranged facing to the light-receiving face of the optical fiber located in the center of the rear end face of the handpiece body, and energized via the circuit board 7 to emit light into the light-receiving face of the optical fiber.

The circuit board 7 is installed in the recess 32 which takes up from outside the space inside the hose-side connecting part 30 without interfering with the various fluid channels, and sealed with the synthetic resin 35. Thus, without modifying the basic structure of the coupling 1, including the position of the light-emitting part 6 and the connection of the fluid channels, the circuit board 7 may be installed in the hose-side connecting part 30 integrally in the circumferential face 31 of the coupling 1, and the interior space of the coupling 1 is made best use of to avoid the modification of the basic structure of the coupling 1. Thus the coupling 1 may be connected to the handpiece body and to the hose using the conventional connection mechanism, and used with various dental handpieces having a conventional lighting device. Even when the handpiece body or the coupling is subjected to impact or heat generated therein, the circuit board 7 may be securely protected, which prolongs the service life of the parts.

Since the circuit board 7 is installed in the coupling 1 simply by placing the circuit board 7 in the recess 32 in the hose-side connecting part 30 and sealing the circuit board 7 with the resin, the installation is facilitated and the associated production cost is suppressed. In particular, since the hose-side connecting part 30 is provided with the groove 331 formed between the distal end face of the part 30 and the distal end face 322 of the recess 32, and with the through holes 332, 332 extending between the proximal end face of the part 30 and the proximal end face 323 of the recess 32, wiring of the circuit board 7 to the light-emitting part 6 and to the electrode pins 341 is facilitated, and the associated production cost is suppressed.

In this embodiment, the recess 32 for receiving the circuit board 7 is described to be formed in the hose-side connecting part 30, but the recess 32, as well as the groove 331 and the through holes 332, 332 for wiring, may alternatively be formed in the body-side connecting part 10, which may be decided suitably depending on the overall structure of the coupling 1.

In this embodiment, the light-emitting part 6 and the circuit board 7 of the LED lighting device 5 are described to be separately installed, but the light-emitting part 6 may be directly connected via its connecting terminals to the circuit board 7 and installed integrally therewith. In this case, the LED lighting device 5 may still be installed in the similar way as discussed above, and the similar effect may be achieved.

In case the light-emitting part 6 and the circuit board 7 are integrally installed as mentioned above, the wiring between the distal end face of the part 30 and the distal end face 322 of the recess 32 is not needed, and the wiring may suitably be decided depending on the overall structure of the coupling 1.

This embodiment of the coupling 1 has been described to be used with an air-turbine handpiece, but the type of the handpiece is not limited, and the present invention may be used widely with various dental handpieces having fluid lines.

According to the present invention, since the circuit board of the LED lighting device is placed in the coupling, the basic structure of the coupling, including the position of the light source and the connection of the fluid channels, does not need to be modified, and the coupling may be connected to a handpiece body and to a hose with a conventional connecting mechanism. Further, the circuit board placed in the coupling is protected against impact upon and heat generated in the handpiece body or the coupling.

According to one embodiment of the present invention, since the circuit board is contained in the casing, which is placed in the corresponding seat in one of the fluid channels, installation of the circuit board is facilitated and the associated production cost may be suppressed. The interior space of the coupling is made best use of to avoid modification of the basic structure of the coupling. The circuit board is provided with double protection against impact upon and heat generated in the handpiece body or the coupling. Since the circuit board is directly cooled with the fluid passing through the fluid channel where the circuit board is arranged, the service life of the parts are prolonged.

According to another embodiment of the present invention, since the circuit board is placed in the recess in the circumferential face of the coupling, and sealed with a resin, installation of the circuit board is facilitated and the associated production cost may be suppressed. The interior space of the coupling is made best use of to avoid modification of the basic structure of the coupling. The circuit board is provided with protection against impact upon and heat generated in the handpiece body or the coupling. By forming means for wiring a cable electrically connected to the circuit board provided either or both between the recess and the end face of the hose-side connecting part facing to the body-side connecting part and between the recess and the end face of the hose-side connecting part opposite to the body-side connecting part, wiring of the circuit board to the light-emitting part and with the electrode pins is facilitated, and the associated production cost is suppressed.

## Claims

1. A coupling with a built-in light source for use with and by connecting to a handpiece body having fluid lines and a light guide, and to a hose for delivering fluids, comprising:
a body-side connecting part to be connected to a handpiece body,
a hose-side connecting part to be connected to a hose for delivering fluids, said hose-side connecting part connecting to a proximal end of said body-side connecting part,
fluid channels extending through said body-side and hose-side connecting parts for communicating fluid lines in the handpiece body with the hose, and
a light source disposed in said body-side or hose-side connecting part to be arranged facing to a light-receiving face of a light guide in the handpiece body when the coupling is connected to the handpiece body,
**characterized in that** said light source is an LED lighting device comprising light-emitting means having an LED chip, and a circuit board electrically connected to the light-emitting means for controlling the voltage supplied to the LED chip, and
that said circuit board is placed in said body-side or hose-side connecting part.

2. The coupling according to claim 1, wherein said circuit board is contained in a casing, and said casing is placed in one of said fluid channels.

3. The coupling according to claim 2, wherein said one of said fluid channels is provided with a seat for said casing, said seat having a shape conforming to a contour of said casing.

4. The coupling according to claim 3, wherein said casing has two circumferential faces of different shapes, and said seat has two sides of different shapes corresponding to said circumferential faces of said casing.

5. The coupling according to claim 3, wherein said casing and said seat have in respective contacting surfaces connecting means for electrically connecting the circuit board in the casing to a power source.

6. The coupling according to claim 2, wherein said light-emitting means is directly connected via connecting terminals to the circuit board, and said light-emitting means and the circuit board are integrally placed in the body-side or hose-side connecting part.

7. The coupling according to claim 2, wherein said light-emitting means is disposed in one of said body-side and hose-side connecting parts, and said circuit board is disposed in the other of said body-side and hose-side connecting parts, and wherein said light-emitting means and said circuit board are connected via a cable.

8. The coupling according to claim 7, wherein said light-emitting means is disposed in the distal end of said body-side connecting part, and said circuit board contained in the casing is disposed in said one of said fluid channels in said hose-side connecting part.

9. The coupling according to claim 1 wherein saidbody-side or hose-side connecting part has a recess dented from a circumferential face of said part without interfering with said fluid channels extending through said part, and wherein said circuit board is placed in said recess.

10. The coupling according to claim 9, wherein said circuit board placed in said recess is sealed with a synthetic resin.

11. The coupling according to claim 9, wherein said light-emitting means is directly connected via connecting terminals to the circuit board, and said light-emitting means and circuit board are integrally placed in the body-side or hose-side connecting part.

12. The coupling according to claim 9, wherein said light-emitting means is disposed in one of said body-side and hose-side connecting parts, and said circuit board is disposed in the other of said body-side and hose-side connecting parts, and wherein said light-emitting means and said circuit board are connected via a cable.

13. The coupling according to claim 12, wherein said light-emitting means is disposed in a distal end of said body-side connecting part, and said circuit board is placed in said recess in said hose-side connecting part, wherein said hose-side connecting part has means for wiring a cable electrically connected to said circuit board provided either or both between said recess and an end face of said hose-side connecting part facing to said body-side connecting part and between said recess and an end face of said hose-side connecting part opposite to saidbody-side connecting part.
